(19) Europäisches Patentamt
European Patent Office
Office européen des brevets

(11) **EP 3 237 875 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **15813085.6**

(22) Anmeldetag: **22.12.2015**

(51) Int Cl.:
**G01M 17/007** (2006.01)

(86) Internationale Anmeldenummer:
**PCT/EP2015/080954**

(87) Internationale Veröffentlichungsnummer:
**WO 2016/102555 (30.06.2016 Gazette 2016/26)**

(54) **VERFAHREN UND VORRICHTUNG ZUM DURCHFÜHREN EINES PRÜFLAUFS AUF EINEM PRÜFSTAND**

METHOD AND DEVICE FOR PERFORMING A TEST RUN ON A TEST STAND

PROCÉDÉ ET DISPOSITIF POUR EFFECTUER UN CYCLE D'ESSAI SUR UN BANC D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014 AT 509382014**

(43) Veröffentlichungstag der Anmeldung:
**01.11.2017 Patentblatt 2017/44**

(73) Patentinhaber: **AVL List GmbH**
**8020 Graz (AT)**

(72) Erfinder:
• **PFISTER, Felix**
**8010 Graz (AT)**
• **SCHMIDT, Martin**
**63225 Langen (DE)**
• **REITZE, Clemens**
**76199 Karlsruhe (DE)**

(74) Vertreter: **Patentanwälte Pinter & Weiss OG**
**Prinz-Eugen-Straße 70**
**1040 Wien (AT)**

(56) Entgegenhaltungen:
**EP-A2- 1 037 030     WO-A1-2014/010409**
**AT-A2- 514 144     AT-U2- 11 001**

## Beschreibung

Die gegenständliche Erfindung betrifft ein Verfahren zum Durchführen eines Prüflaufs auf einem Prüfstand, wobei ein Prüfling durch eine Belastungsmaschine belastet wird und die Belastungsmaschine durch eine Antriebsregeleinheit geregelt wird und die Antriebsregeleinheit zur Regelung der Belastungsmaschine zumindest einen einzuregelnden Dyno-Sollwert verwendet, wobei der zumindest eine Dyno-Sollwert aus einer Simulation berechnet wird, sowie eine zugehörige Vorrichtung zum Regeln eines Prüfstandes zum Durchführen eines Prüflaufes.

Zur Durchführung realitätsnaher Prüfläufe auf Prüfständen zum Testen von Fahrzeugen oder Fahrzeugkomponenten (Prüfling), wie z.B. einem Fahrzeug, einem Antriebsstrang, einem Verbrennungsmotor, einem Getriebe, einer Traktionsbatterie, etc., wird in jüngster Zeit verstärkt auf eine Simulation des Fahrzeugs, der Teststrecke, der Fahrzeugumgebung, der Interaktion zwischen Fahrzeug und Fahrbahn und des Fahrers anhand von geeigneten Simulationsmodellen zurückgegriffen, um daraus Sollwertvorgaben, z.B. Drehzahlen, Drehmomente, Strom, Spannungen, etc., für einen Prüfling am Prüfstand und für eine damit verbundene Belastungsmaschine zu berechnen. Das bedeutet, dass der Prüfling am Prüfstand physisch aufgebaut ist und durch eine Belastungsmaschine, z.B. durch ein Drehmoment oder eine Drehzahl, belastet wird. Das Fahrzeug, oder ein Teil davon, in dem der Prüfling zur Anwendung kommt, wird dabei durch Simulationsmodelle simuliert und die Simulation ergänzt für den Prüflauf den physisch aufgebauten Prüfling am Prüfstand. Unter Prüflauf wird allgemein verstanden, den Prüfling über eine Schnittstelle mit einem zeitlichen Belastungsverlauf, z.B. in Form eines Drehmoment-Zeit-Diagramms oder Drehzahl-Zeit-Diagramms, zu belasten. Das Ziel dabei ist beispielsweise das Abfahren einer Fahrstrecke mit dem Prüfling, wobei der Prüfling am Prüfstand angeordnet ist - der Prüfling soll also am Prüfstand dieselbe Belastung erfahren, wie wenn der Prüfling in einem realen Fahrzeug real auf der Fahrstrecke unterwegs wäre.

Bei Verwendung von Simulationsmodellen für den Prüflauf werden aus den Simulationsmodellen in, in der Regel, konstanten Zeitschritten, z.B. mit einer Frequenz von 1kHz, in Echtzeit die Sollwerte für den Prüflauf berechnet und am Prüfstand vom Prüfling und der Belastungsmaschine eingeregelt. Dazu werden am Prüfstand auch bestimmte Messgrößen, wie Drehmomente und Drehzahlen, messtechnisch erfasst und in der Simulation verarbeitet. Für höherdynamische Regelvorgänge, z.B. Bremsmanöver oder rasches Beschleunigen, sind aber kürzere Zeitschritte erwünscht bzw. für realistische Prüfläufe notwendig. Allerdings stößt man dabei aufgrund verfügbarer Rechenleistungen sehr rasch an Grenzen, da die Sollwerte nicht rasch genug ermittelt werden können. Für hochdynamische realitätsnahe Anwendungen sind Zykluszeiten der Regelung von bis zu 10kHz oder mehr notwendig, was derzeit nicht mit ausreichender Genauigkeit wirtschaftlich umsetzbar ist. Entweder muss man dazu die Simulationsmodelle vereinfachen, um mit der verfügbaren Rechenleistung auszukommen, oder man muss sich mit größeren Zeitschritten der Regelung zufrieden geben. Beides ist aber in der Praxis für hochdynamische Vorgänge wenig zufriedenstellend.

US 2015/0219529 A1 offenbart eine Prüfstandsregelung, bei der mit einer ersten Einheit eine (Dreh-)Geschwindigkeit eines Reifens ermittelt und dieser Wert an eine zweite Recheneinheit übergeben wird. Die zweite Recheneinheit ermittelt daraus den Reifenwiderstand und einen Sollwert für den Dynanmometer.

AT 514144 A2 offenbart eine Prüfstandsregelung, bei der die momentane Drehzahl des Fahrzeugrades ermittelt wird, um daraus ein Steuersignal für die Belastungsmaschine zu errechnen.

Insbesondere die realitätsnahe Berücksichtigung des Verhaltens zwischen Reifen und Fahrbahn, z.B. der Reifenschlupf, stellt hohe Anforderungen an die Simulation. Die EP 1 037 030 B1 zeigt hierzu ein Verfahren, das es gestattet, das Verhalten eines Fahrzeugs auf einer Fahrbahn möglichst realitätsnah zu simulieren. Dabei wird das Schlupfverhalten des Reifens anhand eines Reifenmodells in einer Simulationseinheit berechnet. Das Reifenmodell liefert ein Drehmoment, das der Belastungsmaschine, die den Reifen am Prüfstand simuliert, als Sollwert vorgegeben wird und das am Prüfstand eingeregelt wird, und eine vom Reifen auf die Fahrbahn übertragene Längskraft, die in einem Fahrzeugmodell zur Berechnung der Fahrzeuggeschwindigkeit verarbeitet wird. Hier wird das Reifenverhalten also vollständig auf einem Simulationsrechner simuliert. Die mögliche Dynamik wird damit durch die Leistungsfähigkeit des Simulationsrechners und/oder von der Komplexität der Simulationsmodelle bestimmt. Mit diesem Verfahren sind Zykluszeiten für die Regelung von typischerweise 1-3kHz möglich, was für realitätsnahe, hochdynamische Prüfläufe aber nicht ausreichend ist.

Die Wartung eines Reifenmodells wie in der EP 1 037 030 B1 ist allerdings relativ aufwendig, da das gesamte Reifenmodell durchaus komplex werden kann. Abgesehen davon ist aus diesen Gründen auch eine Änderung oder Anpassung des Reifenmodells, auch nur eines Teiles davon, schwierig. Nicht zuletzt ist das Reifenmodell auch unflexibel, da das implementierte Reifenmodell festgeschrieben ist. Will man ein anderes Reifenmodell oder einen andren Teil des Reifenmodells, z.B. für die Berechnung der Querkraft oder des Reifenschlupfes, verwenden, dann muss das ganze Reifenmodell ausgetauscht oder adaptiert werden.

Es ist daher eine Aufgabe der gegenständlichen Erfindung, die Handhabung eines Reifenmodells zum Regeln eines Prüflaufs auf einem Prüfstand einfacher und flexibler und damit praktikabler zu machen.

Diese Aufgabe wird mit einem eingangs erwähnten Verfahren erfindungsgemäß dadurch gelöst, dass in einer ersten Simulationseinheit mit einem ersten Simulationsmodell zumindest eine Längsgeschwindigkeit des Radaufstandspunkts eines Reifens berechnet wird und die Längsgeschwindigkeit einer zweiten Simulationseinheit übergeben wird, die anhand der Längsgeschwindigkeit mit einem zweiten Simulationsmodell eine Längskraft und/oder ein Rollwiderstandsmoment des Reifens berechnet und mit der Längskraft und/oder dem Rollwiderstandsmoment zumindest ein Dyno-Sollwert für die Antriebsregeleinheit ermittelt wird. Durch diese Aufteilung des Simulationsmodells in ein separates erstes Simulationsmodell und ein zweites Simulationsmodell wird eine funktionale Abstraktion und eine Modularisierung erreicht, die es ermöglicht, die einzelnen Simulationsmodelle, bzw. Teilmodelle, unabhängig voneinander zu parametrieren, zu warten oder zu adaptieren. Das kann nun deutlich überschaubarer erfolgen, da die einzelnen Simulationsmodelle getrennt voneinander sind und jeweils nur gewisse Teilaspekte der Simulation des Reifens abdecken. Durch die festgelegten Schnittstellen zwischen den Simulationsmodellen muss ein Simulationsmodell keinerlei Kenntnis vom anderen Simulationsmodell haben. Das ermöglicht es wiederum, Simulationsmodelle von unterschiedlichen Herstellern zu verwenden oder ein bestimmtes Simulationsmodell mit verschiedenen anderen Simulationsmodellen zu kombinieren. Die Hersteller der Simulationsmodelle müssen darüber hinaus auch keine Kompetenz in Sachen Maschinendynamik der Belastungsmaschine oder des Prüfstandes mitbringen und brauchen sich mit diesem Thema nicht zu beschäftigen, da damit nur eine Schnittstelle zur Verfügung gestellt wird, die am Prüfstand genutzt werden kann. Man erhält somit problemangepasste Schnittstellen. Die Integration komplexer Simulationsmodelle und Simulationsumgebung in Prüfständen wird dadurch ebenfalls vereinfacht.

In gleichermaßen wird diese Aufgabe mit einer Vorrichtung zum Regeln eines Prüfstandes zum Durchführen eines Prüflaufes gelöst, bei der eine erste Simulationseinheit mit einem ersten Simulationsmodell und eine zweite Simulationseinheit mit einem zweiten Simulationseinheit vorgesehen sind, wobei die erste Simulationseinheit dazu eingerichtet ist, zumindest eine Längsgeschwindigkeit des Radaufstandspunktes eines Reifens zu berechnen und an die zweite Simulationseinheit zu übergeben, und die zweite Simulationseinheit dazu eingerichtet ist, anhand der Längsgeschwindigkeit eine Längskraft und/oder ein Rollwiderstandsmoment des Reifens zu berechnen und daraus zumindest einen Dyno-Sollwert für die Antriebsregeleinheit zu ermitteln.

Ein Simulationsmodell kann mit dem erfindungsgemäßen Ansatz auch beliebig komplex werden. Insbesondere lassen sich in der ersten Simulationseinheit auch andere Größen berechnen, wie beispielsweise eine Vertikalkraft, eine Querkraft, ein Bohrmoment oder ein Kippmoment des Reifens. Diese Größen können über die vorgesehene Schnittstelle der zweiten Simulationseinheit zur Berechnung der Längskraft und/oder des Rollwiderstandsmoments bzw. des Dyno-Sollwerts für die Antriebsregeleinheit übergeben werden.

Wenn in der zweiten Simulationseinheit aus der Längskraft und/oder dem Rollwiderstandsmoment der zumindest eine Dyno-Sollwert für die Antriebsregeleinheit berechnet wird, dann kann der Antriebsregeleinheit direkt ein Soll-Belastungsmoment oder eine Soll-Dynodrehzahl vorgegeben werden. Damit muss auch die Antriebsregeleinheit keinerlei Kenntnis von einem Simulationsmodell haben. Das ermöglicht es, eine beliebige am Prüfstand vorhandene Antriebsregeleinheit zu verwenden, insbesondere auch ohne diese adaptieren zu müssen.

Eine weitere Aufgabe der gegenständlichen Erfindung liegt darin, das Problem der beschränkten möglichen Dynamik bei der Durchführung eines Prüflaufs mit einem Simulationsmodell auf einem Prüfstand zu verbessern. Diese Aufgabe wird erfindungsgemäß dadurch gelöst, dass zumindest eine der Größen Längsgeschwindigkeit, Vertikalkraft, Querkraft, Bohrmoment und Kippmoment, in der ersten Simulationseinheit mit einer ersten Frequenz berechnet werden und daraus die Längskraft und/oder das Rollwiderstandsmoment in der zweiten Simulationseinheit mit einer zweiten Frequenz berechnet werden. Vorzugsweise ist dabei die erste Frequenz kleiner als die zweite Frequenz. Damit werden die für das Erreichen einer hohen Prüfstandsdynamik notwendigen Größen des Kraftwinders des Reifens öfters ermittelt, als die Längsgeschwindigkeit bzw. als die restlichen Größen des Kraftwinders. Aufgrund der Aufteilung der Simulationsmodelle reicht hierzu die verfügbare Rechenkapazität in der zweiten Simulationseinheit aus. Die in der ersten Simulationseinheit berechneten Größen können ohne Einschränkung der Qualität der Simulation weniger häufig aktualisiert, also berechnet, werden. Das ermöglicht insbesondere die Durchführung von hochdynamischen Prüfläufen auf Prüfständen, bei denen ein Prüfling mit einer Belastungsmaschine verbunden ist, die von einer Antriebsregeleinheit geregelt wird.

Wenn das zweite Simulationsmodell in der Antriebsregeleinheit implementiert wird, kann eine allfällige Totzeit zur datentechnischen Übertragung von Größen zwischen der zweiten Simulationseinheit und der Antriebsregeleinheit verringert werden. Durch diese umrichternahe Implementierung des zweiten Simulationsmodells ist es möglich, die Dyno-Sollwerte noch schneller zu ermitteln.

Die Genauigkeit der Simulationsmodelle kann erhöht werden, wenn Korrekturterme definiert werden, die die Größen Längskraft und/oder Rollwiderstandsmoment in Abhängigkeit von einem aktuellen Sturz und/oder von einem aktuellen Schräglauf des Reifens korrigieren. Das ermöglicht es auch, am Prüfstand eine Kurvenfahrt zu simulieren. Ebenso führt es zur Erhöhung der Simulationsgenauigkeit, wenn im ersten Simulationsmodell und/oder im zweiten Simulationsmodell bei der Simulation ein Reifenschlupf, der von der Längskraft abhängig ist, berücksichtigt wird.

Das erfindungsgemäße Verfahren lässt sich dabei vorteilhafterweise auch auf einem Rollenprüfstand einsetzen, bei dem zumindest ein Reifen in kraftschlüssiger Verbindung mit einer Rolle, die von der Belastungsmaschine angetrieben wird, steht. Hierbei wird vorteilhafterweise ein Rollenmoment der Rolle gemessen, da diese Messgröße im Normalfall auf einem Rollenprüfstand verfügbar ist. In der zweiten Simulationseinheit wird dann aus dem zweiten Simulationsmodell die Längskraft oder das Rollwiderstandsmoment berechnet und die jeweils andere Größe aus einer Bewegungsgleichungen (z.B. der Euler'schen Bewegungsgleichung) berechnet. Damit kann die Berechnung der Längskraft oder des Rollwiderstandsmoments vereinfacht werden.

Der Rollenprüfstand kann vorteilhafterweise auch dazu benutzt werden, um die kraftschlüssige Verbindung der Rolle als Reibradgetriebe mittels einer als Dyno-Sollwert berechnete Latschgeschwindigkeit, d.h. eine bestimmte Umfangsgeschwindigkeit der Lauffläche bzw. des Laufbandes, einzuregeln.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig.1 einen Reifen auf einer gewölbten Fahrbahn mit einem reifenbezogenen Koordinatensystem,
Fig.2 ein Beispiel eines Antriebsstrangprüfstandes,
Fig.3 ein erfindungsgemäßes Regelkonzept des Prüfstandes,
Fig.4 eine vorteilhafte Weiterentwicklung des Regelkonzepts und
Fig.5 ein Beispiel eines Rollenprüfstandes.

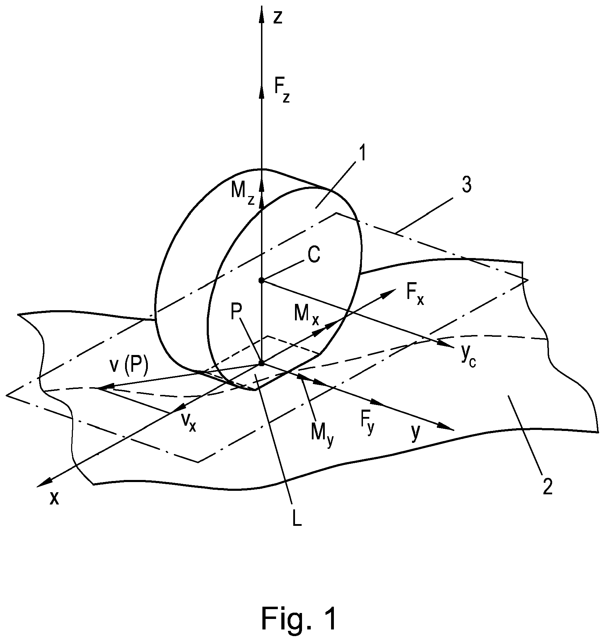

In Fig.1 ist schematisch ein Reifen 1 auf einer im Allgemeinen gewölbten Fahrbahn 2 dargestellt. Der Reifen 1 steht am Radaufstandspunkt P auf der Fahrbahn 2 auf (Fig.1 zeigt die Tangentialebene 3 auf die gewölbte Fahrbahn 2 im Radaufstandspunkt P) und der Reifen 1 dreht sich um den Radmittelpunkt C um eine Drehachse $y_c$. Der Reifen 1 steht dabei nicht in einem Punkt P auf der Fahrbahn 2 auf, sondern auf einer Reifenaufstandsfläche, die gemeinhin als Latsch L bezeichnet wird. Für die folgenden Überlegungen wird von einem rechtshändigen Koordinatensystem ausgegangen, wie in Fig.1 dargestellt. Die x-Achse entspricht der Spur des Reifens 1. Die y-Achse ist die Parallele der Drehachse $y_c$ durch den Radaufstandspunkt P und die z-Achse ist die Verbindungsgerade durch Radaufstandspunkt P und den Radmittelpunkt C. Der Radaufstandspunkt P ist somit jener Punkt der den Abstand zwischen gewölbter Fahrbahn 2 und Radmittelpunkt C minimiert. Damit ergeben sich am Reifen 1 gemäß dem gewählten Koordinatensystem eine Vertikalkraft $F_z$, eine Längskraft $F_x$ in Richtung der Spur und eine Querkraft $F_y$, ein Rollwiderstandsmoment $M_y$, ein Bohrmoment $M_z$ und ein Kippmoment $M_x$. Diese Kräfte und Momente werden zusammengefasst auch als Reifen-Kraftwinder (=Schraube zweiter Art oder Dyname) bezeichnet. Der Reifen-Kraftwinder ist als intrinsische physikalische Größe von der Zerlegung in ein bestimmtes Koordinatensystem unabhängig. Die in einem fahrbahnfesten Koordinatensystem beobachtete Geschwindigkeit des Radaufstandspunktes P des virtuellen Fahrzeugs wird mit V(P) bezeichnet. Die Projektion von V(P) auf die Spur wird Längsgeschwindigkeit genannt und mit $v_x$ abgekürzt.

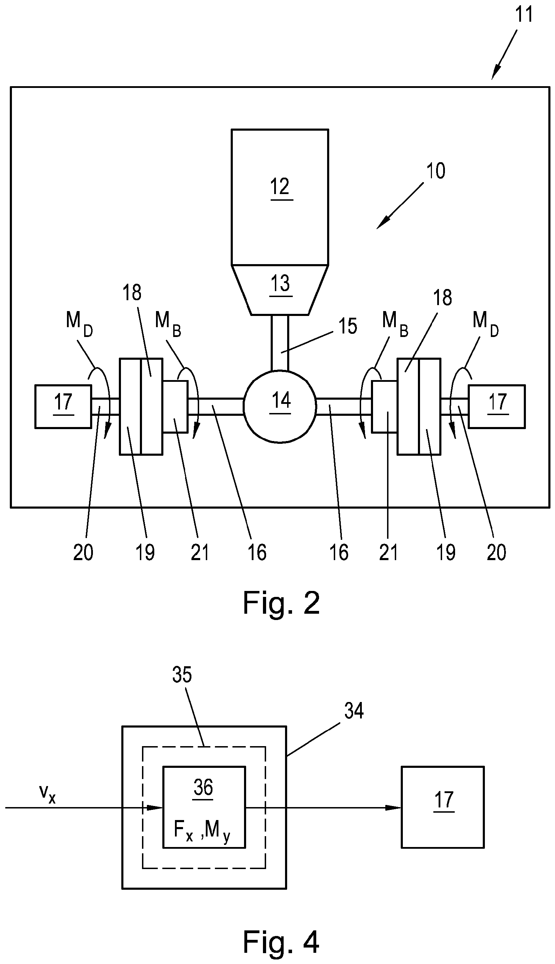

In Fig.2 ist beispielhaft die Anordnung eines Prüflings 10, hier ein Antriebsstrang, auf einem Prüfstand 11, hier ein Antriebsstrangprüfstand, dargestellt. Der Prüfling 10 ist dabei als reale Hardware physisch am Prüfstand 11 aufgebaut. Der Antriebsstrang umfasst hier eine Antriebseinheit 12, wie z.B. einen Verbrennungsmotor oder einen Elektromotor, der ein Getriebe 13 antreibt. Eine Antriebswelle 15 verbindet das Getriebe 13 mit einem Differenzialgetriebe 14, das in bekannter Weise zwei Seitenwellen 16 antreibt. An der Seitenwelle 16 ist im Normalfall das Fahrzeugrad mit dem Reifen 1 an den Radträgern 18 angeordnet. Am vorliegenden Prüfstand 11 wird das Fahrzeugrad durch eine Belastungsmaschine 17, in der Regel ein Elektromotor, auch Dynamometer oder kurz Dyno genannt, ersetzt, der in geeigneter Weise mit den Radträgern 18 verbunden ist, z.B. formschlüssig durch einen Verbindungsflansch 19 und eine Dynowelle 20. Der Antriebsstrangprüfstand ist somit dadurch gekennzeichnet, dass er eine formschlüssige Verbindung zwischen Prüfling und Belastungsmaschine 17 realisiert. Ebenso ist in der Regel ein Bremssystem 21 vorgesehen, um zum Bremsen ein Bremsmoment $M_B$ in den Antriebsstrang einzuprägen. Ebenso könnten im Antriebsstrang auch noch weitere Drehmomente wirken, z.B. ein Drehmoment eines Radnabenmotors oder eines Elektromotors in einem Hybridantriebsstrang, die ein weiteres Antriebsmoment erzeugen.

Für die Erfindung ist die Erkenntnis wichtig, dass von den Kräften und Momenten des Reifen-Kraftwinders nur ein Teil die Drehbewegung des Reifens 1 um seine Drehachse $y_c$ beeinflusst, was wiederum unmittelbar den Antriebsstrang bzw. den Prüfling 10 beeinflusst, und der andere, im Sinne der Schraubentheorie hierzu orthogonale Teil des Reifen-Kraftwinders, die Fahrdynamik des Fahrzeuges, in dem der Antriebsstrang virtuell (durch Simulation) oder real eingebaut ist, beeinflusst. Vom Reifen-Kraftwinder beeinflussen nur die Längskraft $F_x$ und das Rollwiderstandsmoment $M_y$ die Drehbewegung des Reifens 1 um die Drehachse $y_c$. Alle anderen Größen des Reifen-Kraftwinders sind im Sinne der Schraubentheorie orthogonal zur Schraube erster Art und haben keinen direkten Einfluss auf die Drehbewegung des Reifens 1, sondern diese wirken auf die Radaufhängung und damit auf das Fahrzeug.

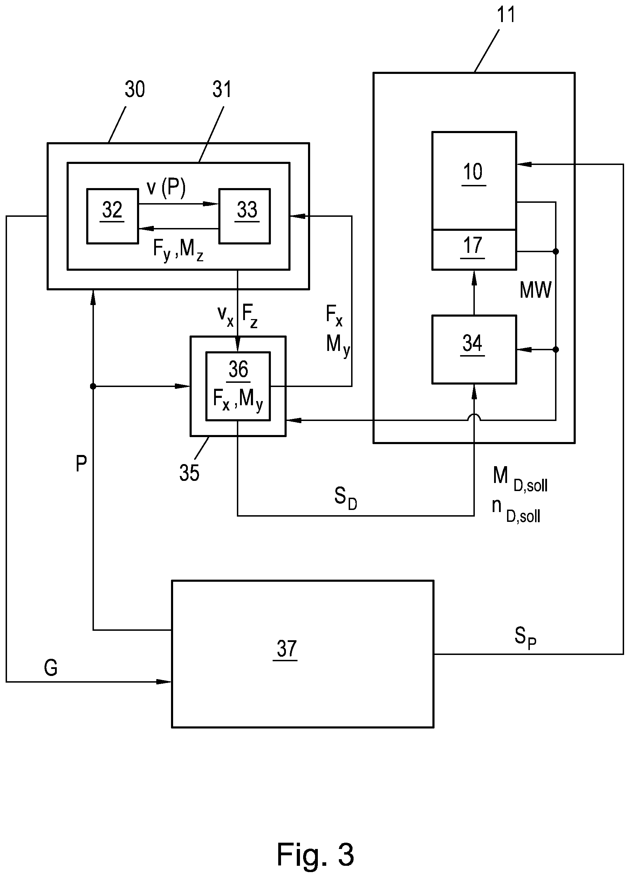

Anhand von Fig.3 wird nachfolgend das Simulations- und Regelkonzept des Prüfstandes 11 näher erläutert. Am Prüfstand 11 ist der Prüfling 10, beispielsweise ein Antriebsstrang wie in Fig.2 gezeigt, physisch angeordnet. Der Prüfling 10 ist mit einer Anzahl von Belastungsmaschinen 17 verbunden und wird von dieser belastet, beispielsweise durch ein Belastungsmoment $M_D$. Der Einfachheit halber wird im Folgenden aber von nur einer Belastungsmaschine 17 ausgegangen. Der Prüfling 10 kann durch eine Automatisierungseinheit 37 des Prüfstandes 11 gemäß den Vorgaben des durchzuführenden Prüflaufs geregelt werden, z.B. kann eine Drosselklappe eines Verbrennungsmotors 12 durch die Automatisierungseinheit 37 geregelt werden, indem die Automatisierungseinheit 37 Prüflings-Sollwerte $S_P$, z.B. eine Drehzahl und/oder ein Drehmoment, für den Prüfling 10 berechnet. Die Automatisierungseinheit 37 kann dazu auch in einer Simulationseinheit 30 berechnete Simulationsgrößen G erhalten, wie nachfolgend noch ausgeführt wird.

Die Belastungsmaschine 17 wird am Prüfstand 11 von einer Antriebsregeleinheit 34 geregelt. Dazu wird der Antriebsregeleinheit 34 ein Soll-Belastungsmoment $M_{D,soll}$, oder gleichwertig eine Soll-Dynodrehzahl $n_{D,soll}$ (allgemein ein Dyno-Sollwert $S_D$), vorgegeben, das von der Antriebsregeleinheit 34 eingeregelt werden soll. Hierzu kann auch vorgesehen sein, dass die Antriebsregeleinheit 34 für die Regelung von der Belastungsmaschine 17 und/oder vom Prüfling 10 Messwerte MW erhält, wie z.B. eine Istdrehzahl oder ein Istdrehmoment, die mittels geeigneter Sensoren am Prüfling 10 oder an der Belastungsmaschine 17 erfasst werden können. Der Dyno-Sollwert $S_D$ wird hierzu in der Simulation ermittelt, wie nachfolgend erläutert.

In einer ersten Simulationseinheit 30, z.B. ein Simulationsrechner mit Simulationshardware und Simulationssoftware, ist ein erstes Simulationsmodell 31 implementiert, hier z.B. mit Teilmodellen in Form eines Fahrzeugmodells 32 und eines ersten Reifenmodells 33. Mit dem ersten Simulationsmodell 31, hier insbesondere dem ersten Reifenmodell 33, werden Kräfte und Momente des Reifen-Kraftwinders berechnet, die die Drehbewegung des Reifens 1 um seine Drehachse $y_C$, wie oben ausgeführt, nicht unmittelbar beeinflussen, also zumindest eine der Größen Vertikalkraft $F_z$, Seitenkraft $F_y$, Kippmoment $M_x$ und Bohrmoment $M_z$. Davon können Größen, die die Querdynamik des Reifens 1 beeinflussen, also insbesondere eine Seitenkraft $F_y$ und oder ein Bohrmoment $M_z$, auch dem Fahrzeugmodell 32 rückgeführt werden, das diese Größen für die Simulation des virtuellen Fahrzeugs verarbeitet, wie in Fig.3 angedeutet.

Das Fahrzeugmodell 32 kann eine aktuelle Fahrzeuggeschwindigkeit V(P) für die einzelnen Fahrzeugräder (oder im Falle einer Vereinfachung für das Gesamtfahrzeug) berechnen und dem ersten Reifenmodell 33 zur weiteren Verarbeitung übergeben.

Im ersten Simulationsmodell 31 wird insbesondere die Längsgeschwindigkeit $v_x$ des Radaufstandspunktes P des Reifens 1 berechnet. Das kann entweder im Fahrzeugmodell 32 oder im ersten Reifenmodell 33 erfolgen. Es ist aber auch denkbar, dass das Simulationsmodell 31 keine Teilmodelle in Form eines Fahrzeugmodells 32 oder eines ersten Reifenmodells 33 umfasst.

In diesem Falle wird die Längsgeschwindigkeit $v_x$ unmittelbar durch das erste Simulationsmodell 31 berechnet. Diese berechnete Längsgeschwindigkeit $v_x$ des Radaufstandspunktes P wird an eine zweite Simulationseinheit 35 zur weiteren Verarbeitung übergeben. Daneben können gegebenenfalls weitere in der ersten Simulationseinheit 30 berechnete Größen des Kraftwinders (Vertikalkraft $F_z$, Seitenkraft $F_y$, Kippmoment $M_x$ oder Bohrmoment $M_z$), oder weitere Größen (z.B. geometrische, kinematische Größen oder Fahrbahnbeschaffenheitswerte (wie z.B. Reibwerte), an die zweite Simulationseinheit 35 zur weiteren Verarbeitung übergeben werden.

In der zweiten Simulationseinheit 35, z.B. ein zweiter Simulationsrechner mit Simulationshardware und Simulationssoftware, ist nun ein zweites Simulationsmodell 36, insbesondere ein zweites Reifenmodell, implementiert, das Kräfte und Momente des Reifen-Kraftwinders berechnet, die die Drehbewegung des Reifens 1 um dessen Drehachse $y_C$ unmittelbar beeinflussen, also die Längskraft $F_x$ und/oder das Rollwiderstandsmoment $M_y$. Dazu verwendet die zweite Simulationseinheit 35 zumindest die von der ersten Simulationseinheit 30 erhaltene Längsgeschwindigkeit $v_x$, und gegebenenfalls auch weitere erhaltene Größen, wie Vertikalkraft $F_z$, Seitenkraft $F_y$, Kippmoment $M_x$ oder Bohrmoment $M_z$, geometrische oder kinematische Größen (wie z.B. Schräglaufwinkel oder Quergeschwindigkeiten) oder Größen, die die Fahrbahnbeschaffenheit betreffen. Die Längskraft $F_x$ ist beispielsweise, wie aus der Reifen Physik bekannt, im Wesentlichen von der kinematischen Größen der Längsgeschwindigkeit $v_x$ des Radaufstandspunktes P, aber gegebenenfalls auch von Größen des Kraftwinders, wie der Vertikalkraft $F_z$, abhängig, woraus ein einfaches Modell für die Ermittlung der Längskraft $F_x$ ableitbar ist. Aus der Längsgeschwindigkeit $v_x$, und gegebenenfalls aus anderen benötigten Größen, wie z.B. den Größen des Kraftwinders oder dem Schräglaufwinkel oder dem Sturz des Reifens 1, die im Fahrzeugmodell 32 berechnet werden können, wird der Dyno-Sollwert $S_D$, hier z.B. das Soll-Belastungsmoment $M_{D,soll}$ oder die Soll-Dynodrehzahl $n_{D,soll}$, für die Antriebsregeleinheit 34 ermittelt.

Dies geschieht beispielsweise mit einer Bewegungsgleichung, wie der Euler'schen Bewegungsgleichung in der Form

$$J_W \ddot{\alpha} = M_y + F_x r + M_B + M_A + M_{aux}$$

mit den folgenden Größen:
Massenträgheitsmoment des Fahrzeugrades $J_W$, Drehbeschleunigung $\ddot{\alpha}$ mit dem Drehwinkel $\alpha$ (der gemessen werden kann), Rollwiderstandsmoment $M_y$, Längskraft $F_x$, Radius des Fahrzeugrades r, Bremsmoment $M_B$, Antriebsmoment $M_A$, das z.B. vom Verbrennungsmotor 12 in den Antriebsstrang eingeprägt wird, und beliebigen Zusatzmomenten $M_{aux}$, wie z.B. Reibmomente, Luftwiderstandsmoment, usw. Die Drehmomente sind als algebraische Größen gegebenenfalls vorzeichenbehaftet. Die Größen Bremsmoment $M_B$ und Antriebsmoment $M_A$ werden entweder gemessen oder sind aus dem Prüflauf bekannt, oder werden aus anderen am Prüfstand 11 gemessenen Größen berechnet oder geschätzt.

Im gezeigten Ausführungsbeispiel nach Fig.3 wird im ersten Reifenmodell 33 die Längsgeschwindigkeit $v_x$ und die Vertikalkraft $F_z$ berechnet und an die zweite Simulationseinheit 35 übergeben. Eine Seitenkraft $F_y$ und ein Bohrmoment $M_z$ werden ebenfalls im ersten Reifenmodell 33 berechnet und an das Fahrzeugmodell 32 zurückgegeben. Abgesehen davon, können auch die in der zweiten Simulationseinheit 35 berechneten Größen des Kraftwinders, wie z.B. die Längskraft $F_x$ und/oder das Rollwiderstandsmoment $M_y$, an das erste Simulationsmodell 31 rückgeführt werden, wie in Fig.3 angedeutet.

Für die Ermittlung des Dyno-Sollwertes $S_D$ kann in einer Näherung die Berechnung nur einer der beiden Größen, Längskraft $F_x$ oder Rollwiderstandsmoment $M_y$, ausreichend sein. Beispielsweise könnte das Rollwiderstandsmoment $M_y$=0 angenommen werden, oder es könnte nur das Rollwiderstandsmoment $M_y$ berücksichtigt werden. Die obige Bewegungsgleichung würde sich dabei entsprechend anpassen.

Die erste Simulationseinheit 30 und/oder die zweite Simulationseinheit 35 können hierzu auch benötigte Parameter P für die Simulation, z.B. Fahrbahnparameter, Umgebungsparameter oder Reifenparameter, von der Automatisierungseinheit 37 gemäß dem durchzuführenden Prüflauf erhalten.

Ebenso kann die erste und/oder die zweite Simulationseinheit für die Simulation auch Messwerte MW aus dem Prüfstand 11 erhalten, wie in Fig.3 angedeutet, beispielsweise Drehzahlen und Drehmomente.

Ein wesentlicher Vorteil der Aufteilung des Simulationsmodells zur Berechnung des Dyno-Sollwertes $S_D$ in ein separates erstes Simulationsmodell 33 und ein zweites Simulationsmodell 36 ist im Prinzip der funktionalen Abstraktion und der Modularisierung zu sehen. Die Hersteller der ersten und zweiten Simulationseinheit 30, 35 bzw. der darauf implementierten Simulationsmodelle 31, 36, die auch verschieden sein können und die in aller Regel keine Kompetenz in Sachen Maschinendynamik der Belastungsmaschine 17 oder des Prüfstandes 11 mitbringen, brauchen sich mit diesem Thema nicht zu beschäftigen, da damit nur eine Schnittstelle zur Verfügung gestellt wird, die am Prüfstand 11 genutzt werden kann. Man erhält somit problemangepasste Schnittstellen. Die Integration komplexer Simulationsmodelle 31, 36 und Simulationsumgebung in Prüfständen 11 wird dadurch ebenfalls vereinfacht. Abgesehen davon ist auf einem Prüfstand 11 die zweite Simulationseinheit 35 häufig bereits fertig implementiert und vorhanden. Damit kann man diese vorhandene Schnittstelle einfach mit ersten Simulationseinheiten 30 verschiedener Anbieter kombinieren. Dies ist ein wertvoller Beitrag im Hinblick auf die von vielen Anwendern geforderten Offenheit der Simulations- und Prüfstandssysteme.

Ein weiterer wichtiger Vorteil der Aufteilung des Simulationsmodells in ein separates erstes Simulationsmodell 33 und ein zweites Simulationsmodell 36, die auch auf verschiedenen Simulationseinheiten 30, 35 implementiert sind, liegt darin, dass die für die Drehbewegung des Reifens 1, und damit für die Dynamik, verantwortlichen Größen des Reifen-Kraftwinders mit kleineren Zeitschritten berechnet werden können, als die anderen Größen. Beispielsweise werden die für die Drehbewegung des Reifens 1 verantwortlichen Größen des Reifen-Kraftwinders, Längskraft $F_x$ und/oder Rollwiderstandsmoment $M_y$, in der zweiten Simulationseinheit 35 mit einer Frequenz von 10kHz berechnet, während die Berechnung der Längsgeschwindigkeit $v_x$ in der ersten Simulationseinheit 30 mit einer Frequenz von 1kHz erfolgt. Damit liegt der für die Regelung der Belastungsmaschine 17 notwendige Dyno-Sollwert $S_D$ in kleineren Zeitschritten (höherer Frequenz) vor, was eine zeitlich feiner aufgelöste Regelung der Belastungsmaschine 17 und damit auch das Regeln hochdynamischer Regelvorgänge ermöglicht. Dazu kommt noch, dass die Längskraft $F_x$ und/oder das Rollwiderstandsmoment $M_y$ näher an der Antriebsregeleinheit 34 berechnet werden, wodurch auch Totzeiten für die Übertragung des Dyno-Sollwerts $S_D$ an die Antriebsregeleinheit 34 verringert werden können, was für eine hochdynamische Berechnung ebenfalls vorteilhaft ist. Die in der ersten Simulationseinheit 30 berechneten Größen werden in größeren Zeitschritten, z.B. mit einer Frequenz von 1kHz, berechneten. Für die zweite Simulationseinheit 35 werden die von der ersten Simulationseinheit 30 erhaltenen Größen, insbesondere Längsgeschwindigkeit $v_x$ und gegebenenfalls Größen des Kraftwinders, mit größeren Zeitschritten (niedriger Frequenz) aktualisiert, als die zweite Simulationseinheit 35 die Dyno-Sollwerte $S_D$ berechnet. Für die Durchführung des Prüflaufs stellt das aber kein Problem dar. Die zweite Simulationseinheit 35 führt im Allgemeinen die berechneten Größen Längskraft $F_x$ und/oder Rollwiderstandsmoment $M_y$, und gegebenenfalls weitere Größen, an die erste Simulationseinheit 30 zurück.

In einer besonders vorteilhaften Ausgestaltung ist das zweite Simulationsmodell 36 in der Antriebsregeleinheit 34, die in diesem Fall auch als zweite Simulationseinheit 35 fungiert, implementiert, wie in Fig.4 dargestellt. Damit kann der Dyno-Sollwert $S_D$ direkt in der Antriebsregeleinheit 34 berechnet werden, was insbesondere auch allfällige Totzeiten durch notwendige Datenübertragung zwischen zweiter Simulationseinheit 35 und Antriebsregeleinheit 34 noch weiter reduziert. Damit wird es auch möglich bestehende Prüfstandlösungen auf einfache Weise nachzurüsten, indem die existierende Antriebsregeleinheit 34 am Prüfstand 11 durch das zweite Simulationsmodell 36 ergänzt wird. Für die Berechnung der für die Drehbewegung des Reifens 1 verantwortlichen Größen des Reifen-Kraftwinders, Längskraft $F_x$ und/oder Rollwiderstandsmoment $M_y$, reicht die verfügbare Rechenkapazität der vorhandenen Antriebsregeleinheit 34 in der Regel aus.

Das erfindungsgemäße Vorgehen der getrennten Ermittlung von Längsgeschwindigkeit $v_x$ und Längskraft $F_x$ und/oder Rollwiderstandsmoment $M_y$ bedarf aber nicht unbedingt eines Prüflings 10 am Prüfstand 11, bei dem lediglich die Reifen 1 fehlen, wie beim Antriebsstrang der Fig.1. Die Erfindung könnte natürlich auch bei anderen Prüflingen 10 angewendet werden. Wenn der Prüfling z.B. nur ein Verbrennungsmotor 12 auf einem Motorprüfstand ist, der mit einer Belastungsmaschine 17 verbunden ist, dann lassen sich trotzdem realitätsnahe Prüfungen durchführen. Dazu kann wie oben beschrieben in einer ersten Simulationseinheit 30 mit einerm ersten Simulatiosmodell 31 die Längsgeschwindigkeit $v_x$, und gegebenenfalls Größen des Reifen-Kraftwinders, die die Drehbewegung des Reifens 1 nicht beeinflussen, berechnet werden. In einer zweiten Simulationseinheit 35 bzw. in der Antriebsregeleinheit 34 können mit dem zweiten Simulationsmodell 36 die Größen des Reifen-Kraftwinders berechnet werden, die die Drehbewegung des Reifens beeinflussen, also die Längskraft $F_x$ und/oder das Rollwiderstandsmoment $M_y$. Um in diesem Fall einen Dyno-Sollwert $S_D$ für die Belastungsmaschine 17 zu ermitteln, könnten die Komponenten des Antriebsstranges zwischen Verbrennungsmotor 12 und Reifen 1 ebenfalls simuliert werden, vorzugsweise in der zweiten Simulationseinheit 35 oder der Antriebsregeleinheit 34.

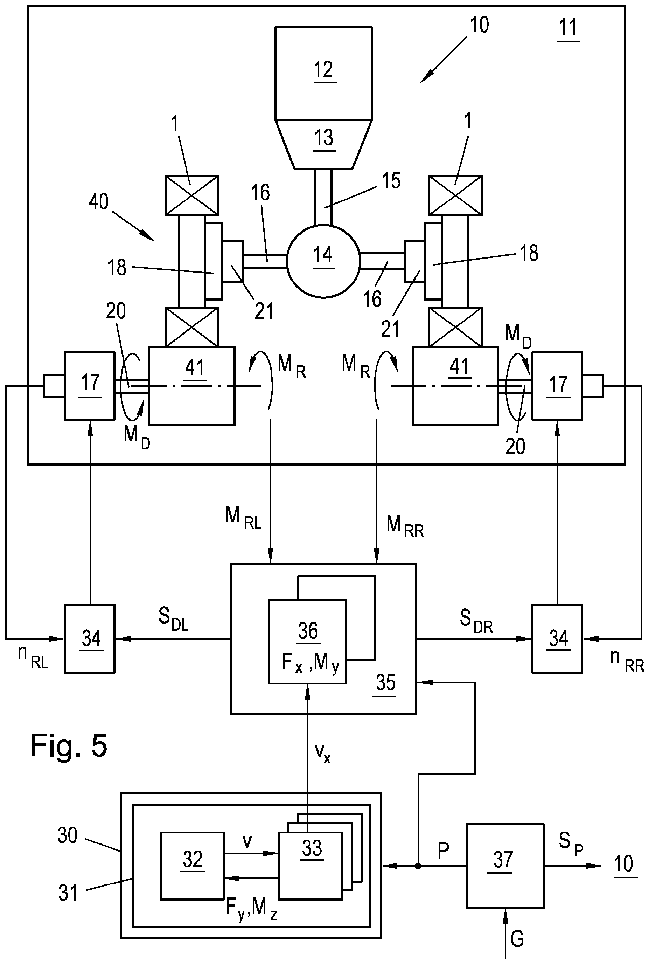

Auf der anderen Seite kann die erfindungsgemäße Aufteilung der Berechnung der Größen des Reifen-Kraftwinders auch in einem Rollenprüfstand angewendet werden, also wenn der Reifen 1 am Prüfstand 11 real vorhanden ist, wie nachfolgend unter Bezugnahme auf die Fig.5 beschrieben wird.

In Fig.5 ist ein Antriebsstrang wie in Fig.2 beschrieben auf einem Prüfstand 11 in Form eines Rollenprüfstandes angeordnet. Hier sind am Prüfling 10 reale Fahrzeugräder 40 mit den Reifen 1 an den Radträgern 18 angeordnet. Am Prüfstand 11 sind Rollen 41 angeordnet, auf denen die Fahrzeugräder 40 über den Latsch L der Reifen 1 (siehe Fig.1) aufliegen. Obwohl im gezeigten Ausführungsbeispiel für jedes Fahrzeugrad 40 eine eigene Rolle 41 vorgesehen ist, kann aber natürlich auch nur eine Rolle 41 für mehrere Fahrzeugräder 40, insbesondere einer Achse, vorgesehen sein. Für einen Allrad-Antriebsstrang können auch vier Rollen 41 oder je eine Rolle 41 pro Achse vorgesehen sein. Jede Rolle 41 wird von einer zugeordneten Belastungsmaschine 17 angetrieben. Ein Rollenprüfstand ist ein Reibradgetriebe und somit ein Beispiel für eine kraftschlüssige Getriebebauform. Dabei rollt der Reifen 1 kraftschlüssig über die Rolle 41 und wird hierbei mittels der Belastungsmaschine 17 belastet. Die Belastung erfolgt hierbei entweder durch ein Belastungsmoment $M_D$ oder indem dem Reifen 1 kraftschlüssig eine (Soll-) Drehzahl n eingeprägt wird. Wie aus der Theorie der Reibradgetriebe hinlänglich bekannt, führen Kräfte und Momente im Latsch L zu einem Reifenschlupf in der Kontaktzone zwischen Reifen 1 und Rolle 41. Solche Rollenprüfstände und Reibradgetriebe sind hinlänglich bekannt, weshalb hier nicht näher darauf eingegangen wird. Die Rolle 41 ist demnach ein Mittel, um dem Reifen 1 über eine kraftschlüssige Verbindung eine bestimmte Latschgeschwindigkeit, bzw. eine Geschwindigkeit des Laufbandes oder der Lauffläche, aufzuprägen. Diese Latschgeschwindigkeit ist an die Fahrzeuggeschwindigkeit über Kraftgesetze, nicht jedoch rein kinematisch gekoppelt. Die Fahrzeuggeschwindigkeit ist hierbei nicht mit der Tangentialgeschwindigkeit der Rollenoberfläche identisch: Beispielsweise können die Lauffläche des Reifens 1 bzw. der Latsch L auf einer Eisplatte durchdrehen, während das Fahrzeug sich bei 100% Reifenschlupf im Stillstand befindet. Die Rolle 41 befindet sich bei der Simulation dieses Fahrmanövers nicht im Stillstand.

Die Regelung des Prüflings 10, z.B. des Verbrennungsmotors 12, erfolgt wieder wie schon bezüglich der Fig.3 erläutert über die Automatisierungseinheit 37 des Prüfstandes 11, die wieder Messwerte MW aus dem Prüfstand erhalten kann (in Fig.5 aus Gründen der Übersichtlichkeit nicht eingezeichnet). Eine Antriebsregeleinheit 34 kann als Messwert MW z.B. einen Istwert der Rollengeschwindigkeit $n_{RL}$, $n_{RR}$ oder des Rollenmomentes $M_{RL}$, $M_{RR}$, die am Prüfstand 11 über geeignete Drehzahlgeber erfasst werden kann, zugeführt werden. Die Dyno-Sollwerte $S_{DL}$, $S_{DR}$ werden wieder in einer Simulation ermittelt. Die Simulation berücksichtigt hierbei vorzugsweise die dem Rollenprüfstand inhärente Eigenschaft, dass die Rolle 41 ein Reibradgetriebe ist und die Rolle 41 und der Latsch L des Reifens 41 eine von der Gesamtsystemdynamik abhängige Relativgeschwindigkeit (Reifenschlupf) haben. Der Rollenprüfstand kann folglich eine Latschgeschwindigkeit einregeln. Somit kann an beiden Prüfstandtypen, am Rollenprüfstand und am Antriebsstrangprüfstand, der in Realität auf beliebigen Fahrbahnen vorhandene Reifenschlupf implementiert werden.

Am Rollenprüfstand wird in der Regel ein Istwert des Rollenmoments $M_R$ (bzw. $M_{RL}$, $M_{RR}$ bei zwei Rollen 41) zur Verfügung gestellt, das am Prüfstand 11 mittels geeigneter Sensoren erfasst wird. Aus dem erfindungsgemäßen Grundgedanken, dass nur bestimmte Größen des Reifen-Kraftwinders die Drehbewegung beeinflussen, insbesondere die Längskraft $F_x$ und das Rollwiderstandsmoment $M_y$, ergibt sich aufgrund der Euler'schen Bewegungsgleichung für eine Rolle 41 unmittelbar der Zusammenhang

$$J_R \ddot{\alpha}_R = M_y + F_x r_R + M_R + M_{aux}$$

mit dem bekannten Rollenradius $R_R$, dem Massenträgheitsmoment der Rolle $J_R$ und der Drehbeschleunigung der Rolle $\ddot{\alpha}_R$ gegenüber einem ruhenden Bezugssystem und und beliebigen Zusatzmomenten $M_{aux}$, wie z.B. aerodynamische und Reibverluste der Rolle, usw.

In der ersten Simulationseinheit 30 ist wieder ein erstes Simulationsmodell 31 mit einem Fahrzeugmodell 32 und einem ersten Reifenmodell 33 (oder im Falle mehrere Reifen 1 auch mehrere erste Reifenmodelle 33, wie in Fig.5 angedeutet) implementiert. Mit dem ersten Simulationsmodell 31 wird wieder die Längsgeschwindigkeit $v_x$ des Radaufstandspunktes P, und gegebenenfalls Größen des Reifen-Kraftwinders, die die Drehbewegung des Reifens 1 nicht direkt beeinflussen, berechnet.

Mit dem in der zweiten Simulationseinheit 35 implementierten zweiten Simulationsmodell 36 (oder im Falle mehrere Reifen 1 auch mehrere zweite Simulationsmodelle 36, wie in Fig.5 angedeutet), vorzugsweise wieder ein zweites Reifenmodell, werden nun wieder die Größen des Reifen-Kraftwinders berechnet, die die Drehbewegung des Reifens 1 unmittelbar beeinflussen, nämlich die Längskraft $F_x$ und/oder das Rollwiderstandsmoment $M_y$. Hierzu können mit dem zweiten Simulationsmodell 36, wie schon bzgl. Fig. 3 erläutert, beide Größen aus der Simulation gewonnen werden. Alternativ könnten die beiden Größen auch aus der obigen Euler'schen Bewegungsgleichung berechnet werden. Wenn die Simulation nun eine der beiden Größen Längskraft $F_x$ und das Rollwiderstandsmoment $M_y$ berechnet bzw. schätzt, kann als Simulation aus den Messwerten des Rollenmoments $M_R$ und der Drehbeschleunigung $\ddot{\alpha}_R$ der Rolle 41 aus der obigen Bewegungsgleichung direkt die jeweils fehlende zweite Größe berechnet werden. Wie bereits oben erläutert, kann für die Ermittlung des Dyno-Sollwertes $S_D$ die Berechnung nur einer der beiden Größen, Längskraft $F_x$ oder Rollwiderstandsmoment $M_y$, ausreichend sein.

Die so gemessenen oder geschätzten Größen werden im Allgemeinen an die erste Simulationseinheit 30 zurückgeführt.

Am Rollenprüfstand können zusätzlich auch noch Effekte zweiter Ordnung, die sich aus dem Sturz und dem Schräglauf der Fahrzeugräder 40 ergeben, berücksichtigt werden. Dazu könnten Korrekturterme definiert werden, die die Größen Längskraft $F_x$ und/oder Rollwiderstandsmoment $M_y$ in Abhängigkeit vom aktuellen Sturz und/oder dem aktuellen Schräglauf, die gemessen werden können oder aus dem Prüflauf bzw. aus dem Simulationsmodell des Fahrzeugs auch bekannt sein können, korrigieren. Die Korrekturterme können aus bekannten und vorgegebenen Modellen, Kennlinien oder Kennfeldern ermittelt werden. Eine solche Korrektur wäre prinzipiell auch in einer Anordnung nach Fig.2 denkbar, beispielswiese wenn der Sturz und der Schräglauf im ersten Simulationsmodell 31 berücksichtigt werden, z.B. über geeignete Simulationsmodelle der Fahrzeugräder.

Die Rolle 41 und der Reifenlatsch L haben eine von der Gesamtsystemdynamik abhängige bezogene Relativgeschwindigkeit, den sogenannten Reifenschlupf. Aus dem ermittelten Reifen-Kraftwinder des oder der Reifen 1 des Fahrzeugs kann in der zweiten Simulationseinheit 35 in an sich bekannter Weise aus einem inversen Reifenmodell eine Soll-Latschgeschwindigkeit des Reifens 1 berechnet werden. Aus der Soll-Latschgeschwindigkeit des Reifens 1 und einem Latschmodell, welches die Reibungsphysik des Reibradgetriebes Rolle/Reifenlatsch berücksichtigt, ergibt sich eine Soll-Latschgeschwindigkeit der Rolle 41, die der Antriebsregeleinheit 34 als Dyno-Sollwert $S_D$ vorgegeben werden kann. Als Latschmodell kann beispielsweise eine bekannte Schlupfkurve herangezogen werden, welche Sturz, Vorspur, Vertikalkraft $F_Z$ und Temperatureinflüsse berücksichtigt. Der Rollenprüfstand kann daher auch eine Latschgeschwindigkeit modellbasiert einregeln, wenn die Raddrehzahl nicht direkt gemessen wird.

Ein weiterer Aspekt der Erfindung liegt darin, dass auch Reifenverluste berücksichtigt werden können. Beispielsweise ist die Verlustleistung im Reifen 1 aufgrund des Reifenschlupfes abhängig vom Rollwiderstandsmoment $M_y$ und von der Längskraft $F_x$. Diese Verlustleistung kann in der Simulation berücksichtigt werden, und zwar auch dann, wenn die realen Verluste im Reibradgetriebe des Rollenprüfstandes andere sind als in der virtuell simulierten Fahrumgebung. Hierzu könnte beispielsweise vorgesehen sein, dass im ersten Simulationsmodell 31, oder im Fahrzeugmodell 32 des Fahrzeugs, in der ersten Simulationseinheit 30 diese Verlustleistung zur Berechnung der Vortriebsleistung des Fahrzeuges berücksichtigt wird. Dazu kann in der zweiten Simulationseinheit 35 entweder eine Verlustleistung berechnet und der ersten Simulationseinheit 30 übergeben werden, oder es werden dazu direkt die Längskraft $F_x$ und/oder das Rollwiderstandsmoment $M_y$ übergeben.

Ganz besonders vorteilhaft ist es in diesem Zusammenhang, dass somit auch am Rollenprüfstand die bei einer Kurvenfahrt oder aufgrund unebener Fahrbahnen verursachten Reifenverluste berücksichtigt werden können. Eine Kurvenfahrt führt beispielsweise zu einem Schräglaufwinkel des Fahrzeugrades 40, der in der ersten Simulationseinheit 30 berücksichtigt wird. Die Verlustleistung steigt mit dem Schräglaufwinkel an, wobei dieser Zusammenhang bekannt ist und durch eine Formel oder ein Modell abgebildet werden kann. Das ermöglicht es, im ersten Simulationsmodell 31 durch eine Kurvenfahrt verursachte Reifenverluste zu berücksichtigen (gegebenenfalls wieder durch Korrekturterme), womit am Prüfstand 11 auch realitätsnahe Prüfläufe mit Kurvenfahrten durchgeführt werden können.

Selbstverständlich können die Längskraft $F_x$ und/oder das Rollwiderstandsmoment $M_y$ auch direkt als Dyno-Sollwert $S_D$ an die Antriebsregeleinheit 34 übergeben werden. Damit könnte die Antriebsregeleinheit 34 direkt die Längskraft $F_x$ und/oder das Rollwiderstandsmoment $M_y$ zur Ansteuerung der Belastungsmaschine 17 nutzen. Mit der Berechnung der Längskraft $F_x$ und/oder Rollwiderstandsmoment $M_y$ wird in diesem Fall gleichzeitig auch der Dyno-Sollwert $S_D$ ermittelt.

Aus den obigen Ausführungen geht hervor, dass in der ersten Simulationseinheit 30 mit dem ersten Simulationsmodell 31, bzw. einem ersten Reifenmodell 33, für einen Reifen 1 die Längsgeschwindigkeit $v_x$ berechnet und an die zweite Simulationseinheit 35 übertragen werden. Selbstverständlich könnten aber auch andere gleichwertige Größen berechnet werden, aus denen die Längsgeschwindigkeit $v_x$ unmittelbar ableitbar ist. Auch das wird im Sinne der Erfindung als Berechnung der Längsgeschwindigkeit $v_x$ verstanden. Als Beispiel sei hier der Fall angeführt, dass in der ersten Simulationseinheit 30 an Stelle der Längsgeschwindigkeit $v_x$ die Projektion von V(P) auf die Fahrzeuglängs- und Querachse sowie die Vorspur berechnet werden und der zweiten Simulationseinheit 35 übergeben werden, die daraus unmittelbar Längsgeschwindigkeit $v_x$ ableiten könnte.

Aus den obigen Ausführungen geht hervor, dass in der ersten Simulationseinheit 30 mit dem ersten Simulationsmodell 31, bzw. einem ersten Reifenmodell 33, für einen Reifen 1 auch die Vertikalkraft $F_z$ berechnet werden kann. Selbstverständlich könnten aber auch andere gleichwertige Größen berechnet werden, aus denen die Vertikalkraft $F_z$ unmittelbar ableitbar ist. Auch das wird im Sinne der Erfindung als Berechnung der Vertikalkraft $F_z$ verstanden. Als Beispiel sei hierin lineares Kraftgesetz des Reifens 1 in der Form $F_z = z \cdot c[+\dot{z} \cdot d]$ angeführt. Dabei bezeichnet z die Reifeneinfederung zu einem bestimmten Zeitpunkt und c eine Federkonstante des Reifens 1. Optional könnte dabei auch noch ein Dämpfungsterm mit einer Dämpfungskonstante d berücksichtigt werden. Damit könnte in der der ersten Simulationseinheit 30 gleichwertig zur Vertikalkraft $F_z$ die Reifeneinfederung z berechnet und der zweiten Simulationseinheit 35 übergeben werden, die daraus unmittelbar die Vertikalkraft $F_z$ ableiten könnte.

## Patentansprüche

1. Verfahren zum Durchführen eines Prüflaufs auf einem Prüfstand (11), wobei ein Prüfling (10) durch eine Belastungsmaschine (17) belastet wird und die Belastungsmaschine (17) durch eine Antriebsregeleinheit (34) geregelt wird und die Antriebsregeleinheit (34) zur Regelung der Belastungsmaschine (17) zumindest einen einzuregelnden Dyno-Sollwert ($S_D$) verwendet, wobei der zumindest eine Dyno-Sollwert ($S_D$) aus einer Simulation berechnet wird, **dadurch gekennzeichnet, dass** in einer ersten Simulationseinheit (30) mit einem ersten Simulationsmodell (31) zumindest eine Längsgeschwindigkeit ($v_x$) des Radaufstandspunkts (P) eines Reifens (1) berechnet wird und die Längsgeschwindigkeit ($v_x$) einer zweiten Simulationseinheit (35) übergeben wird, **dass** in der zweiten Simulationseinheit (35) anhand der Längsgeschwindigkeit ($v_x$) mit einem zweiten Simulationsmodell (36) eine Längskraft ($F_x$) und/oder ein Rollwiderstandsmoment ($M_y$) des Reifens (1) berechnet wird **und dass** mit der Längskraft ($F_x$) und/oder dem Rollwiderstandsmoment ($M_y$) der zumindest eine Dyno-Sollwert ($S_D$) für die Antriebsregeleinheit (34) ermittelt wird.

2. Verfahren nach Anspruch 1, **dadurch gekennzeichnet, dass** in der ersten Simulationseinheit (30) weiters zumindest eine der Größen Vertikalkraft ($F_z$), Querkraft ($F_y$) Bohrmoment ($M_z$) und Kippmoment ($M_x$) des Reifens (1) berechnet werden und der zweiten Simulationseinheit (35) zur Berechnung der Längskraft ($F_x$) und/oder des Rollwiderstandsmoments ($M_y$) übergeben werden.

3. Verfahren nach Anspruch 1 oder 2, **dadurch gekennzeichnet, dass** in der zweiten Simulationseinheit (35) aus der Längskraft (Fx) und/oder dem Rollwiderstandsmoment ($M_y$) zumindest ein Dyno-Sollwert ($S_D$) für die Antriebsregeleinheit (34) berechnet wird.

4. Verfahren nach einem der Ansprüche 1 bis 3, **dadurch gekennzeichnet, dass** zumindest eine der Größen Längsgeschwindigkeit ($v_x$), Vertikalkraft ($F_z$), Querkraft ($F_y$), Bohrmoment ($M_z$) oder Kippmoment ($M_x$) in der ersten Simulationseinheit (30) mit einer ersten Frequenz berechnet werden und daraus die Längskraft ($F_x$) und/oder das Rollwiderstandsmoment (My) in der zweiten Simulationseinheit (35) mit einer zweiten Frequenz berechnet werden.

5. Verfahren nach Anspruch 4, **dadurch gekennzeichnet, dass** die erste Frequenz kleiner ist als die zweite Frequenz.

6. Verfahren nach Anspruch 1, **dadurch gekennzeichnet, dass** das zweite Simulationsmodell (36) in der Antriebsregeleinheit (34) implementiert wird.

7. Verfahren nach Anspruch 1, **dadurch gekennzeichnet, dass** die Größen Längskraft ($F_x$) und/oder Rollwiderstandsmoment ($M_y$) in Abhängigkeit von einem aktuellen Sturz und/oder von einem aktuellen Schräglauf des Reifens (1) korrigiert werden.

8. Verfahren nach Anspruch 1, **dadurch gekennzeichnet, dass** im ersten Simulationsmodell (31) und/oder im zweiten Simulationsmodell (36) bei der Simulation ein Reifenschlupf, von dem die Längskraft ($F_x$) abhängig ist, berücksichtigt wird.

9. Verfahren nach einem der Ansprüche 1 bis 8, **dadurch gekennzeichnet, dass** als Prüfstand (11) ein Rollenprüfstand eingesetzt wird und zumindest ein Reifen (1) in kraftschlüssiger Verbindung mit einer Rolle (41), die von der Belastungsmaschine (17) angetrieben wird, steht.

10. Verfahren nach Anspruch 9, **dadurch gekennzeichnet, dass** ein Rollenmoment ($M_R$) der Rolle (41) gemessen wird und in der zweiten Simulationseinheit (35) aus dem zweiten Simulationsmodell (36) die Längskraft ($F_x$) oder das Rollwiderstandsmo-

ment ($M_y$) berechnet wird und die jeweils andere Größe aus einer Bewegungsgleichung berechnet wird.

11. Verfahren nach Anspruch 9 oder 10, **dadurch gekennzeichnet, dass** als Dyno-Sollwert ($S_D$) eine Latschgeschwindigkeit berechnet wird, welche die Rolle (41) als Reibradgetriebe über die kraftschlüssige Verbindung einregelt.

12. Vorrichtung zum Regeln eines Prüfstandes (11) zum Durchführen eines Prüflaufes, wobei am Prüfstand (11) ein Prüfling (10) aufgebaut ist und der Prüfling (10) mit einer Belastungsmaschine (17) verbunden ist, und wobei zum Einregeln eines Dyno-Sollwerts ($S_D$) an der Belastungsmaschine (17) eine Antriebsregeleinheit (34) vorgesehen ist und eine Simulation den Dyno-Sollwert ($S_D$) berechnet, **dadurch gekennzeichnet, dass** eine erste Simulationseinheit (30) mit einem ersten Simulationsmodell (33) und eine zweite Simulationseinheit (35) mit einem zweiten Simulationsmodell (36) vorgesehen sind, wobei das erste Simulationsmodell (33) zumindest eine Längsgeschwindigkeit ($v_x$) des Radaufstandspunktes (P) eines Reifens (1) berechnet und an die zweite Simulationseinheit (35) übergibt, **dass** die zweite Simulationseinheit (35) anhand der Längsgeschwindigkeit ($v_x$) eine Längskraft ($F_x$) und/oder ein Rollwiderstandsmoment ($M_y$) des Reifens (1) berechnet und daraus den zumindest einen Dyno-Sollwert ($S_D$) für die Antriebsregeleinheit (34) ermittelt.

13. Vorrichtung nach Anspruch 12, **dadurch gekennzeichnet, dass** die erste Simulationseinheit (30) weiters zumindest eine der Größen Vertikalkraft ($F_z$), Querkraft ($F_y$), Bohrmoment ($M_z$) und Kippmoment ($M_x$) des Reifens (1) berechnet und der zweiten Simulationseinheit (35) zur Berechnung des Dyno-Sollwerts ($S_D$) für die Antriebsregeleinheit (34) übergibt.

14. Vorrichtung nach Anspruch 12 oder 13, **dadurch gekennzeichnet, dass** die erste Simulationseinheit (30) zumindest eine der Größen Längsgeschwindigkeit ($v_x$), Vertikalkraft ($F_z$), Querkraft ($F_y$), Bohrmoment ($M_z$) und Kippmoment ($M_x$) des Reifens (1), mit einer ersten Frequenz berechnet und die zweite Simulationseinheit (35) daraus die Längskraft ($F_x$) und/oder das Rollwiderstandsmoment ($M_y$) mit einer zweiten Frequenz berechnet, wobei die erste Frequenz vorzugsweise kleiner ist als die zweite Frequenz.

15. Vorrichtung nach Anspruch 12, **dadurch gekennzeichnet, dass** als zweite Simulationseinheit (35) die Antriebsregeleinheit (34) vorgesehen ist und das zweite Reifenmodell (36) in der Antriebsregeleinheit (34) implementiert ist.

**Claims**

1. A method for performing a test run on a test bench (11), wherein a test specimen (10) is loaded by a load machine (17), and said load machine (17) is controlled by a drive control unit (34), and the drive control unit (34) uses at least one target dyno value, which must be set, to control the load machine (17), wherein the at least one target dyno value ($S_D$) is calculated from a simulation, **characterized in that** at least one longitudinal velocity ($v_x$) of the wheel contact point (P) of a tire (1) is calculated in a first simulation unit (30) with a first simulation model (31) and the longitudinal velocity ($v_x$) is provided to a second simulation unit (35), **in that** a longitudinal force ($F_x$) and/or a rolling resistance torque ($M_y$) of the tire (1) are calculated in a second simulation unit (35) with a second simulation model (36) on the basis of the longitudinal velocity ($v_x$), **and in that** the at least one target dyno value ($S_D$) for the drive control unit (34) is determined with the longitudinal force ($F_x$) and/or the rolling resistance torque ($M_y$).

2. The method according to claim 1, **characterized in that,** moreover, at least one of the values vertical force ($F_z$), transverse force ($F_y$), drilling torque ($M_z$) and tilting torque ($M_x$) of the tire (1) are calculated in the first simulation unit (30) and provided to the second simulation unit (35) for the calculation of the longitudinal force ($F_x$) and/or rolling resistance torque ($M_y$).

3. The method according to claim 1 or 2, **characterized in that** at least one target dyno value ($S_D$) for the drive control unit (34) is calculated from the longitudinal force ($F_x$) and/or rolling resistance torque ($M_y$) in the second simulation unit (35).

4. The method according to one of claims 1 to 3, **characterized in that** at least one of the values longitudinal velocity ($v_x$), vertical force ($F_z$), transverse force ($F_y$), drilling torque ($M_z$) and tilting torque ($M_x$) is calculated in the first simulation unit (30) at a first frequency, and the longitudinal force ($F_x$) and/or the rolling resistance torque ($M_y$) are calculated from these values in the second simulation unit (35) at a second frequency.

5. The method according to claim 4, **characterized in that** the first frequency is shorter than the second frequency.

6. The method according to claim 1, **characterized in that** the second simulation model (36) is implemented in the drive control unit (34).

7. The method according to claim 1, **characterized in that** the values longitudinal force ($F_x$) and/or rolling

resistance torque ($M_y$) are corrected as a function of a current camber and/or current skew of the tire (1).

8. The method according to claim 1, **characterized in that** a tire slippage, which depends on the longitudinal force ($F_x$), is taken into account in the first simulation model (31) and/or in the second simulation model (36) during the simulation.

9. The method according to one of claims 1 to 8, **characterized in that** a roller test bench is employed as the test bench (11), and at least one tire (1) is frictionally connected with a roller (41) that is driven by the load machine (17).

10. The method according to claim 9, **characterized in that** a rolling resistance torque ($M_R$) of the roller (41) is measured and the longitudinal force ($F_x$) or the rolling resistance torque ($M_y$) is calculated from the second simulation model (36) in the second simulation unit (35), and the respective other value is calculated from an equation of motion.

11. The method according to claim 9 or 10, **characterized in that** a shuffle speed is calculated as the target dyno value ($S_D$), and it adjusts the roller (41) as a friction gear by means of the frictional connection.

12. A device for controlling a test bench (11) for performing a test run, wherein a test specimen (10) is constructed on the test bench (11) and the test specimen (10) is connected to a load machine (17), and wherein a drive control unit (34) is provided to set a target dyno value ($S_D$) on the load machine (17), and a simulation calculates the target dyno value ($S_D$), **characterized in that** a first simulation unit (30) with a first simulation model (33) and a second simulation unit (35) with a second simulation model (36) are provided, wherein the first simulation model (33) calculates at least one longitudinal velocity ($v_x$) of the wheel contact point (P) of a tire (1) and provides it to the second simulation unit (35) **and in that** the second simulation unit (35) calculates a longitudinal force ($F_x$) and/or a rolling resistance torque ($M_y$) of the tire (1) based on the longitudinal velocity ($v_x$), and determines at least one target dyno value ($S_D$) for the drive control unit (34) from it.

13. The device according to claim 12, **characterized in that,** moreover, at least one of the values vertical force ($F_z$), transverse force ($F_y$), drilling torque ($M_z$) and tilting torque ($M_x$) of the tire (1) are calculated in the first simulation unit (30) and provided to the second simulation unit (35) for the calculation of the target dyno value ($S_D$) for the drive control unit (34).

14. The device according to claim 12 or 13, **characterized in that** at least one of the values longitudinal velocity ($v_x$), vertical force ($F_z$), transverse force ($F_y$), drilling torque ($M_z$) and tilting torque ($M_x$) of the tire (1) is calculated in the first simulation unit (30) at a first frequency, and the longitudinal force ($F_x$) and/or the rolling resistance torque ($M_y$) are calculated from these values in the second simulation unit (35) at a second frequency, wherein the first frequency is preferably shorter than the second frequency.

15. The device according to claim 12, **characterized in that** the drive control unit (34) is provided as the second simulation unit (35), and the second tire model (36) is implemented in the drive.

**Revendications**

1. Procédé permettant d'effectuer un cycle d'essai sur un banc d'essai (11), un objet d'essai (10) étant sollicité par une machine de sollicitation (17) et la machine de sollicitation (17) étant régulée par une unité de régulation d'entraînement (34) et l'unité de régulation d'entraînement (34) destinée à réguler la machine de sollicitation (17) utilisant au moins une valeur de consigne dynamométrique ($S_D$) à régler, l'au moins une valeur de consigne dynamométrique ($S_D$) étant calculée à partir d'une simulation, **caractérisé en ce qu'**au moins une vitesse longitudinale ($v_x$) du point de contact de roue (P) d'un pneumatique (1) est calculée dans une première unité de simulation (30) avec un premier modèle de simulation (31) et que la vitesse longitudinale ($v_x$) est transmise à une seconde unité de simulation (35), **en ce qu'**une force longitudinale ($F_x$) et/ou un couple de résistance au roulement ($M_y$) du pneumatique (1) sont calculés dans la seconde unité de simulation (35) sur la base de la vitesse longitudinale ($v_x$) avec un second modèle de simulation (36), et **en ce que** l'au moins une valeur de consigne dynamométrique ($S_D$) pour l'unité de régulation d'entraînement (34) est déterminée avec la force longitudinale ($F_x$) et/ou le couple de résistance au roulement ($M_y$).

2. Procédé selon la revendication 1, **caractérisé en ce qu'**au moins l'une des variables force verticale ($F_z$), force transversale ($F_y$), couple de perçage ($M_z$) et couple de renversement ($M_x$) du pneumatique (1) est calculée dans la première unité de simulation (30) et est transmise à la seconde unité de simulation (35) afin de calculer la force longitudinale ($F_x$) et/ou le couple de résistance au roulement ($M_y$).

3. Procédé selon la revendication 1 ou 2, **caractérisé en ce qu'**au moins une valeur de consigne dynamométrique ($S_D$) pour l'unité de régulation d'entraînement (34) est calculée dans la seconde unité de simulation (35) à partir de la force longitudinale ($F_x$) et/ou du couple de résistance au roulement ($M_y$).

**4.** Procédé selon l'une des revendications 1 à 3, **caractérisé en ce qu'**au moins l'une des variables vitesse longitudinale ($v_x$), force verticale ($F_z$), force transversale ($F_y$), couple de perçage ($M_z$) ou couple de renversement ($M_x$) est calculée dans la première unité de simulation (30) avec une première fréquence et que, à partir de celle-ci, la force longitudinale ($F_x$) et/ou le couple de résistance au roulement ($M_y$) sont calculés dans la seconde unité de simulation (35) avec une seconde fréquence.

**5.** Procédé selon la revendication 4, **caractérisé en ce que** la première fréquence est inférieure à la seconde fréquence.

**6.** Procédé selon la revendication 1, **caractérisé en ce que** le second modèle de simulation (36) est mis en œuvre dans l'unité de régulation d'entraînement (34).

**7.** Procédé selon la revendication 1, **caractérisé en ce que** les variables force longitudinale ($F_x$) et/ou couple de résistance au roulement ($M_y$) sont corrigées en fonction d'un carrossage actuel et/ou d'une inclinaison actuelle du pneumatique (1).

**8.** Procédé selon la revendication 1, **caractérisé en ce qu'**un glissement de pneumatique, dont dépend la force longitudinale ($Fx$), est pris en compte lors de la simulation dans le premier modèle de simulation (31) et/ou dans le second modèle de simulation (36).

**9.** Procédé selon l'une des revendications 1 à 8, **caractérisé en ce que** le banc d'essai (11) utilisé est un banc d'essai à rouleaux et qu'au moins un pneumatique (1) est relié à force avec un rouleau (41) entraîné par la machine de sollicitation (17).

**10.** Procédé selon la revendication 9, **caractérisé en ce qu'**un couple de roulement ($M_R$) du rouleau (41) est mesuré, que la force longitudinale ($F_x$) ou le couple de résistance au roulement ($M_y$) est calculé à partir du second modèle de simulation (36) dans la seconde unité de simulation (35) et que l'autre variable respective est calculée à partir d'une équation de mouvement.

**11.** Procédé selon la revendication 9 ou 10, **caractérisé en ce qu'**une vitesse de contact est calculée en tant que valeur de consigne dynamométrique ($S_D$), laquelle vitesse de contact règle le rouleau (41) en tant qu'engrenage à roue de friction par l'intermédiaire de la liaison à force.

**12.** Dispositif de régulation d'un banc d'essai (11) permettant d'effectuer un cycle d'essai, un objet d'essai (10) étant monté sur le banc d'essai (11) et l'objet d'essai (10) étant relié à une machine de sollicitation (17), et une unité de régulation d'entraînement (34) étant prévue sur la machine de sollicitation (17) afin de régler une valeur de consigne dynamométrique ($S_D$) et une simulation calculant la valeur de consigne dynamométrique ($S_D$), **caractérisé en ce qu'**une première unité de simulation (30) est pourvue d'un premier modèle de simulation (33) et qu'une seconde unité de simulation (35) est pourvue d'un second modèle de simulation (36), le premier modèle de simulation (33) calculant au moins une vitesse longitudinale ($v_x$) du point de contact de roue (P) d'un pneumatique (1) et la transmettant à la seconde unité de simulation (35), **en ce que** la seconde unité de simulation (35) calcule une force longitudinale ($F_x$) et/ou un couple de résistance au roulement ($M_y$) du pneumatique (1) sur la base de la vitesse longitudinale ($v_x$) et que, à partir de ceux-ci, détermine l'au moins une valeur de consigne dynamométrique ($S_D$) pour l'unité de régulation d'entraînement (34).

**13.** Dispositif selon la revendication 12, **caractérisé en ce que** la première unité de simulation (30) calcule en outre au moins l'une des variables force verticale ($F_z$), force transversale ($F_y$), couple de perçage ($M_z$) et couple de renversement ($M_x$) du pneumatique (1) et la transmet à la seconde unité de simulation (35) afin de calculer la valeur de consigne dynamométrique ($S_D$) pour l'unité de régulation d'entraînement (34).

**14.** Dispositif selon la revendication 12 ou 13, **caractérisé en ce que** la première unité de simulation (30) calcule au moins l'une des variables vitesse longitudinale ($v_x$), force verticale ($F_z$), force transversale ($F_y$), couple de perçage ($M_z$) et couple de renversement ($M_x$) du pneumatique (1) avec une première fréquence et que, à partir de celle-ci, la seconde unité de simulation (35) calcule la force longitudinale ($F_x$) et/ou le couple de résistance au roulement ($M_y$) avec une seconde fréquence, la première fréquence étant de préférence inférieure à la seconde fréquence.

**15.** Dispositif selon la revendication 12, **caractérisé en ce que** l'unité de régulation d'entraînement (34) est prévue en tant que seconde unité de simulation (35) et que le second modèle de pneumatique (36) est mis en œuvre dans l'unité de régulation d'entraînement (34).

Fig. 1

11

12

10

13

$M_D$  18  $M_B$  15  $M_B$  18  $M_D$

17  14  17

20  19  21  16  16  21  19  20

# Fig. 2

35

34

$v_x$  36

$F_x , M_y$  17

# Fig. 4

Fig. 3

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150219529 A1
- AT 514144 A2

- EP 1037030 B1